**Europäisches Patentamt**

**European Patent Office**

**Office européen des brevets**

(11) Publication number: **0 120 507**
**B1**

(12) **EUROPEAN PATENT SPECIFICATION**

(45) Date of publication of patent specification: **24.05.89**

(21) Application number: **84200093.7**

(22) Date of filing: **24.01.84**

(51) Int. Cl.⁴: **H 05 B 37/00, H 03 K 17/94**

(54) **Energy-saving switching device.**

(30) Priority: **25.01.83 NL 8300270**

(43) Date of publication of application:
**03.10.84 Bulletin 84/40**

(45) Publication of the grant of the patent:
**24.05.89 Bulletin 89/21**

(84) Designated Contracting States:
**AT BE CH DE FR GB IT LI NL SE**

(56) References cited:
**EP-A-0 067 502**
**DE-A-2 832 874**
**US-A-3 748 496**
**US-A-3 893 081**
**US-A-4 099 168**
**US-A-4 101 878**
**US-A-4 344 071**
**US-A-4 361 767**

(73) Proprietor: **Dijk, Menno**
**Boven Oosterdiep 158**
**NL-9641 JV Veendam (NL)**
(73) Proprietor: **Wijk, Willem Mechiel**
**Lutsborgsweg 34**
**NL-9752 VW Haren (NL)**

(72) Inventor: **Dijk, Menno**
**Boven Oosterdiep 158**
**NL-9641 JV Veendam (NL)**
Inventor: **Wijk, Willem Mechiel**
**Lutsborgsweg 34**
**NL-9752 VW Haren (NL)**

(74) Representative: **Smulders, Theodorus A.H.J., lr.**
**et al**
**Vereenigde Octrooibureaux Nieuwe Parklaan**
**107**
**NL-2587 BP 's-Gravenhage (NL)**

Courier Press, Leamington Spa, England.

## Description

This invention relates to an energy-saving switching device for automatically switching off electrical devices (v), in particular lamps, comprising a microphone (1), an electronic circuit (8, 9, 10, 20), and frequency filter means (4) connected between the microphone (1) and the electronic circuit (8, 9, 10, 20), wherein the electronic circuit in operation upon receiving via the frequency filter means (4) a signal from the microphone (11) will provide control signals for a relay (11), by means of which in use at least one electrical device (v) is connected to the mains voltage (N).

It is known that a considerable amount of electrical energy is wasted owing to electrical apparatus, and in particular lamps, remaining switched on even if there is no need for them.

In offices and the like, for example, light continues to burn in fully deserted spaces because the person who was the last to leave the place did not switch off the lamps. It also occurs that lamps are lit early in the morning, and that people forget to turn off the lamps when sufficient light enters through the windows.

It is clear that a considerable saving in energy can be realized by consistently switching off unnecessarily switched-on lamps or other electrical apparatus in a space.

An energy-saving switching device of the type defined above has been disclosed in US—A—4 361 767. This known device has been designed to automatically de-energize electrically operable equipment in response to a lack of human activity in a room or building. In order to detect such lack of human activity the frequency filter means of the known device comprise a lowpass filter serially connected to a high-pass filter. Together said filters define a pass band having a lower limit at 1000 Hz and a not clearly defined upper limit, that may have some value between 5000 and 10.000 Hz.

A problem with the known energy-saving switching device is that in practice not all kinds of human activity is detected which results in for instance switching off the lights in a room while a person is still present in said room.

It is an object of the present invention to provide an improved energy-saving switching device, which will not switch-off electrical apparatus if a person is still present, but which on the other hand will indeed switch-off electrical apparatus when no person is present during a predetermined period of time.

For this purpose, according to the invention, a switching device of the kind described is characterized in that the frequency filter means (4) have a pass band range of substantially 3800 Hz, having a lower frequency limit of substantially 200 Hz and a upper frequency limit of substantially 4000 Hz.

It is noted that switching devices per se have been designed for a specific purpose, such as switching off the pump of a central heating installation, or switching off a refrigerator. These known switching devices, however, are only suitable for use together with a specific electrical apparatus.

Further, from US—A—4 099 168 an intrusion alarm device is known which will switch on lights and/or other electrical apparatus when sound indicating an intrusion are detected. The intrusion alarm device has a frequency pass band of 500—10.000 Hz. Together with a rate of rise detector this pass band would according to US—A—4 099 168 provide for an effective detection of intrusion-connected sounds such as breaking glass and the like.

The switching device according to the present invention is particularly suitable for switching off the lighting in unused spaces, and is in addition designed to be built-in in conventional standard assembly boxes.

The switching device according to the invention permits being connected to both individual consumers and groups of consumers.

In a simple embodiment, which is suitable for spaces which cannot receive day-light, the switching device according to the invention is arranged so that, in response to sound caused by human beings and after the "on" key has been depressed, the lamps connected to the switching device are switched on.

For spaces capable of receiving day-light, the switching device may be arranged so that the switching device does not become operative unless in the absence of sufficient day-light and in the presence of sound caused by human beings and after the "on" key has been depressed.

Some embodiments of the invention will now be described, by way of example, with reference to the accompanying drawings, in which:

Figure 1 shows a basic diagram of a switching device according to the invention responsive to both light and sound; and

Figure 2 shows an elevational view of a practical embodiment of a switching device according to the invention.

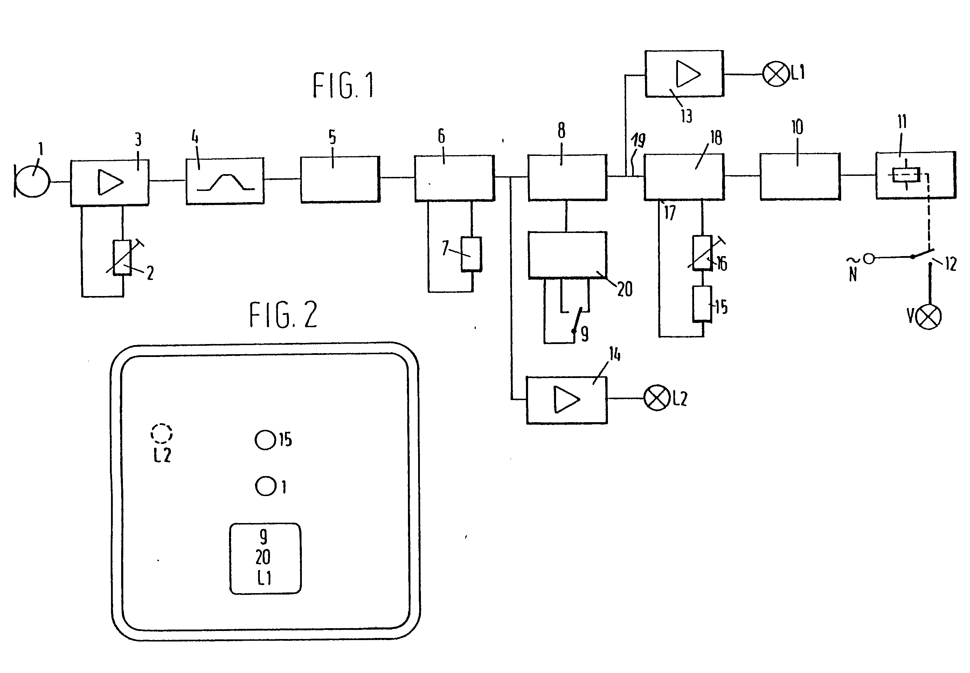

The switching device shown in Figure 1 comprises a microphone 1, which at choice may be placed either together with the remainder of the switching device in one housing or elsewhere.

The microphone 1 is connected via an amplifier 3, provided with a voltage divider 2 for setting its sensitivity, to a frequency filter 4 having such characteristics as to pass only frequencies associated with sounds to which the switching device should respond. The filter has a pass band of 200—4000 Hz.

The output signal from filter 4 is supplied via a flip-flop 5 to a holding circuit 6 with a holding period of, for example, 4 minutes, adjustable by means of an adjusting device 7. This means that, if no acoustic signal is received for more than four minutes after receiving an acoustic signal, the output signal from the holding circuit drops to zero.

The output of the holding circuit is connected to one input of a flip-flop 8. Flip-flop 8 can only give off an output signal in response to a signal provided by the holding circuit if first an "on" key 9, shown diagrammatically, has been depressed. In the embodiment shown in the figure, the "on" key also serves as an "off" key. This combined "on/off" key is connected to a flip-flop 20, which serves as an anti-contact-bouncing circuit 20. The whole unit, i.e. the "on/off" key 9 plus the anti-contact-bouncing circuit 20 is referred to hereinafter as the combined "on/off" key 9/20.

The output of flip-flop 8 causes, via a control circuit 10, the energization of a relay 11, one or more contacts 12 of which can connect one or more consumers V to the mains voltage N.

In order that the position of the switching device and its proper operation may be checked, there may be provided a for example green LED $L_1$ which, if necessary via an amplifier 13, is connected to the output of flip-flop 8.

LED $L_1$ only burns if the combined "on/off" key 9/20 has been depressed and sound is present, and accordingly indicates that the switching device is in operation.

Furthermore, in the embodiment shown, a red LED $L_2$ is provided, which via an amplifier 14 is connected to the output of the holding circuit 6 to indicate that sound has been detected.

The circuit arrangement as described hereinbefore is only responsive to sound.

As stated before, the switching device may also be designed to respond to sound only if there is insufficient day-light. For this purpose, Figure 1 shows a light-sensitive element, for example, an LDR 15, which is connected to a voltage divider 16 for setting a threshold level, and connected to an AND gate 18 having an inverting input 17. The other input 19 of the AND gate is connected to the output of flip-flop 8, so that the AND gate only gives off an output signal if there is sound in the absence of sufficient light. The output of the AND gate is in turn connected to the circuit 10.

When the light has been switched on (LDR is then out of operation) the unit only responds to sound (Reset). If desired, the LDR may be placed at a remote point (Outside). The microphone, too, may be placed at a remote point, should this be desired.

Connected to flip-flop 8 is the combined "on/off" key 9/20 which, when the switching device is stand-by or has been switched on, is used for switching off the switching device.

Figure 2 shows an elevational view of an example of a device shown in Figure 1, placed in a standard assembly box.

Disposed behind the window of the combined "on/off" key designated by 9/20 is the LED designated by L1, the microphone designated by 1, and the light-sensitive element, designated by I5. These elements are placed in a cover plate (except for the red LED indicated by L2, which is disposed under the cover plate) of standard dimensions, and mounted on a standard assembly box in the usual way, with the other parts of the circuit arrangement being housed in the subjacent assembly box and, if necessary, in standard assembly boxes connected to this.

It is observed that, in order to provide a universal system, similar cover plates may be formed without a light-sensitive element, or only with a microphone.

## Claim

An energy saving switching device for automatically switching off electrical devices (v), in particular lamps, comprising a microphone (1), an electronic circuit (8, 9, 10, 20), and frequency filter means (4) connected between the microphone (1) and the electronic circuit (8, 9, 10, 20), wherein the electronic circuit in operation upon receiving via the frequency filter means (4) a signal from the microphone (1) will provide control signals for a relay (11), by means of which in use at least one electrical device (v) is connected to the mains voltage (N), characterized in that the frequency filter means (4) have a pass band range of substantially 3800 Hz, having a lower frequency limit of substantially 200 Hz and a upper frequency limit of substantially 4000 Hz.

## Patentanspruch

Energiesparende Schaltvorrichtung zum automatischen Ausschalten von elektrischen Vorrichtungen (v), insbesondere Lampen, versehen mit einem Mikrophon (1), einem elektronischen Kreis (8, 9, 10, 20) und Frequenzfiltermitteln (4), die zwischen das Mikrophon (1) und den elektronischen Kreis (8, 9, 10, 20) geschaltet sind, wobei der elektronische Kreis im Betrieb beim Empfangen eines Signals vom Mikrophon (1) über die Frequenzfiltermittel (4) Steuersignale für ein Relais (11) erzeugt, durch welches im Betrieb mindestens eine elektrische Vorrichtung (v) an die Netzspannung (N) angeschlossen ist, dadurch gekennzeichnet, dass die Frequenzfiltermittel (4) einen Durchlassbereich von im wesentlichen 3800 Hz aufweisen, mit einer unteren Frequenzgrenze von im wesentlichen 200 Hz und einer oberen Frequenzgrenze von im wesentlichen 4000 Hz.

## Revendication

Un dispositif de commutation d'économie d'énergie pour la mise automatique hors tension des dispositifs électriques (v), en particulier des lampes, comprenant un microphone (1), un circuit électronique (8, 9, 10, 20) et des moyens de filtrage de fréquenze (4) connectés entre le microphone (1) et le circuit électronique (8, 9, 10, 20), dans lequel le circuit électronique, en fonctionnement, lors de la réception d'un signal du microphone (1) par l'intermédiair des moyens de filtrage de fréquence (4), produira des signaux de commande pour un relais (11), à l'aide duquel, en fonctionnement, au moins un dispositif électrique (v) est connecté à la tension de secteur (N), caractérisé en ce que les moyens de filtrage de fré-

quence (4) possèdant une bande passante de substantiellement 3800 Hz, avec une limite de fréquence inférieure de substantiellement 200 Hz et une limite de fréquence supérieure de substantiellement 4000 Hz.

FIG.1

FIG.2

EP 0 120 507 B1